Europäisches Patentamt

European Patent Office

Office européen des brevets

(11) Veröffentlichungsnummer: **0 543 265 A1**

## EUROPÄISCHE PATENTANMELDUNG

(21) Anmeldenummer: **92119263.9**

(22) Anmeldetag: **11.11.92**

(51) Int. Cl.5: **C08G 63/20**, C08G 63/181, B29C 49/04, B65D 65/38

(30) Priorität: **14.11.91 DE 4137390**

(43) Veröffentlichungstag der Anmeldung:
**26.05.93 Patentblatt 93/21**

(84) Benannte Vertragsstaaten:
**AT BE CH DE ES FR GB IT LI LU NL PT SE**

(71) Anmelder: **HOECHST AKTIENGESELLSCHAFT**
**Postfach 80 03 20**
**W−6230 Frankfurt am Main 80(DE)**

(72) Erfinder: **Freund, Lothar, Dr.**
**Börnerweg 37**
**W−6442 Rotenburg(DE)**
Erfinder: **Klein, Peter, Dr.**
**Fasanenweg 13**
**W−6200 Wiesbaden(DE)**

(54) **Modifiziertes Polyethylenterephthalat und seine Verwendung zur Herstellung von Behältern durch Blasextrusion.**

(57) Beschrieben wird ein modifiziertes Polyethylen−terephthalat enthaltend 85 bis 99 Mol % Terephthalsäureeinheiten, 15 bis 1 Mol % Isophthalsäureeinheiten und 0 bis 5 Mol % Einheiten, die von einer zusätzlichen aliphatischen oder aromatischen Dicarbonsäure abgeleitet sind, wobei die Prozentangaben auf die Gesamtmenge an Carbonsäureeinheiten im Polyester bezogen sind, und 95 bis 99,95 Mol % Ethylenglykoleinheiten, 0,05 bis 0,2 Mol % an Einheiten, die abgeleitet von einem tri− oder tetrafunktionellen Alkohol sind, und 0 bis 5 Mol % Einheiten abgeleitet von einem zusätzlichen zweiwertigen aliphatischen oder aromatischen Alkohol, wobei die Prozentangaben auf die Gesamtmenge an Alkoholeinheiten im Polyester bezogen sind, der praktisch keine durch Kettenabbrecher blockierte Endgruppen aufweist, eine Schmelzviskosität, gemessen bei 260°C und einer Scherrate von 1 sec$^{-1}$, zwischen 1000 und 10000 Pa*sec, einen Quotienten der Schmelzviskositäten, gemessen bei 260°C und einer Scherrate von 1 sec$^{-1}$ ($S_1$) sowie einer Scherrate von 100 sec$^{-1}$ ($S_{100}$), $S_1/S_{100}$ von 1,5 bis 5,0 und ein mittels Gel−Permeationschromatographie in einer Mischung von Hexafluorisopropanol und Chloroform als Lösungsmittel bestimmtes Verhältnis des Gewichts− und Zahlenmittels des Molekulargewichts von 2,3 bis 3,5 aufweist.

Das erfindungsgemäß modifizierte Polyethylen−terephthalat kann ohne Kettenabbrecher und ohne eine sich an die Vorkondensation anschließende Festphasenkondensation direkt zur Herstellung von Behältern nach dem Extrusionsblasverfahren einge−setzt werden.

Mit dem neuen modifizierten Polyester können Behälter mit relativ kleinen Innenvolumina hergestellt werden.

EP 0 543 265 A1

Die vorliegende Erfindung betrifft ein vereinfachtes Verfahren zum Extrusionsblasen von modifiziertem Polyethylenterephthalat (PET), die daraus erhältlichen Behälter, sowie den zur Durchführung dieses Verfahrens geeigneten Polyester und dessen Herstellung.

Behälter aus modifiziertem PET sind an sich bekannt. Solche Behälter werden im allgemeinen durch Spritzguß oder durch Blasformen hergestellt.

Bekannt ist ebenfalls die Modifizierung von PET durch Zusatz geringer Mengen von vernetzend oder verzweigend wirkenden Verbindungen, um die Verarbeitbarkeit der Formmassen durch Spritzguß oder durch Blasformen zu gewährleisten.

So werden in der JP − A − 01 − 271,217 blasgeformte Behälter mit einer hohen Gasbarriere beschrieben, die aus Polyestern hergestellt wurden, welche sich von Terephthalsäure, Isophthalsäure, Ethylenglykol und einer multifunktionellen Monomerkomponente mit mindestens drei Hydroxyl − oder Carboxylfunktionen ableiten.

In der JP − A − 59 − 230,022 werden Polyester zur Herstellung von Hohlkörpern mit verbesserter Lichtbeständigkeit und Schlagfestigkeit beschrieben, die 80 bis 95 Mol % Terephthalsäure, 20 bis 5 Mol % Isophthalsäure, hauptsächlich Ethylenglykol als Alkoholkomponente und 0,05 bis 1 Mol % einer polyfunktionellen Hydroxylverbindung enthalten.

Aus der DE − A − 2,017,688 ist ein Verfahren zur Herstellung von Polyestern zur Herstellung von Spritzguß − und Extrusionsformkörpern bekannt, das durch die kombinierte Verwendung eines schwach verzweigten bzw. vernetzten Polyesters und eines kristallisationsfördernden Stoffes gekennzeichnet ist. Die erhaltenen Formteile sind hochkristallin und zeichnen sich gegenüber Formkörpern aus unvernetzten Polyestern durch verbesserte Form − und Dimensionsstabilität aus und weisen eine große Härte und gute Zähigkeit auf. Die beschriebenen Formkörper sind aufgrund der Kristallinität nicht transparent.

In der DE − C − 2,913,215 wird ein modifiziertes PET beschrieben, das sich für das übliche Extrusionsblasen eignet. Nach der Beschreibung wird mit dem dort offenbarten PET erstmalig ein Rohstoff zur Verfügung gestellt, aus dem sich Flaschen und Behälter aus PET unter Verwendung der üblichen Hohlkörperblasmaschinen erfolgreich herstellen lassen, die als brauchbare Behälter für Kosmetika, Nahrungs − und Genußmittel und Pharmazeutika dienen können. Bei dem dort beschriebenen gelfreien PET mit hoher Schmelzfestigkeit handelt es sich um ein Material, das durch Zumischung ganz bestimmter Mengen ausgewählter Kettenverzweigungs − und Kettenabbruchsmittel in Kombination hergestellt wird. Das dort beschriebene PET wird in mindestens zwei Stufen hergestellt, indem man zunächst ein Vorpolymerisat kondensiert, das eine inhärente Viskosität von 0,3 bis 1,0 aufweist und dieses Vorkondensat anschließend der Polymerisation im festen Zustand unterwirft. In der Beschreibung wird ferner darauf hingewiesen, daß es für das erfolgreiche Estrusionsblasen eine Vorbedingung ist, daß das geschmolzene PET einen Vorformling bildet, der genügend lange stabil ist, um von einem Blaswerkzeug umschlossen werden zu können. Dazu ist es notwendig, daß die Schmelze eine ausreichende Viskosität aufweist, damit der Vorformling sich nicht unter dem Einfluß seines eigenen Gewichts verlängert oder dehnt, so daß er entweder nicht durch Extrusionsblasen formbar ist oder einen geblasenen Hohlkörper ergibt, der ungleichmäßige Wandstärke, geringen Oberflächenglanz, eine schlecht ausgebildete Form der Probe oder eine große Zahl von Preßfehlern aufweist.

Schließlich ist aus der US − A − 4,234,708 ein modifiziertes PET auf der Basis von Terephthalsäure, Isophthalsäure, Ethylenglykol und ausgewählten Kettenverzweigungsmitteln bekannt. Das modifizierte Polymere wird erhalten durch Vorkondensation der Monomerkomponenten in Gegewart ausgewählter Kettenabbrecher und durch nachfolgende Polymerisation im festen Zustand. Das modifizierte PET eignet sich zur Herstellung geformter Artikel durch Extrusionsblasen.

Weitere modifizierte PET − Typen zur Herstellung von Behältern durch Extrusionsblasen sind aus den US − A − 4,554,328 und 4,219,527 bekannt.

In allen diesen Publikationen betreffend modifizierte PET − Typen zur Herstellung von Behältern durch Extrusionsblasen werden ein Zusatz von Kettenabbrechern bei der Herstellung des Vorpolymerisats und eine nachfolgende Polymerisation dieses Vorpolymerisats im festen Zustand als notwendig angesehen.

Demgegenüber betrifft die vorliegende Erfindung ein modifiziertes PET zur Herstellung ertrusionsgeblasener Behälter, das ohne den Zusatz von Kettenabbrechern und ohne eine nachfolgende und zeitaufwendige Polymerisation eines Vorpolymerisats im festen Zustand auskommt. Das erfindungsgemäße PET läßt sich also in einem beträchtlich weniger zeitaufwendigen Verfahren herstellen und es kann mit weniger Monomerkomponenten gearbeitet werden. Außerdem ist es für die Verarbeitung des erfindungsgemäß modifizierten Polyethylenterephthalats nicht unbedingt notwendig, irgendwelche Kristallisationsförderer zuzusetzen.

Es wurde gefunden, daß sich die für das Extrusionsblasen erforderlichen rheologischen Eigenschaften des PET durch Modifizierung mit geeigneten Komponenten und durch eine bestimmte Verfahrensführung einstellen lassen. Das erhaltene modifizierte PET läßt sich unmittelbar bei der Herstellung kleiner Behälter einsetzen. Der Erfindung liegt also die Erkenntnis zugrunde, daß man unter Inkaufnahme einer Obergrenze des Behältervolumens ein auf vereinfachte Weise hergestelltes und in bestimmter Weise modifiziertes PET einsetzen kann. Das erfindungsgemäße modifizierte PET ist durch eine hohe Schersensitivität, hohe Schmelzfestigkeit und hohe Schmelzviskosität gekennzeichnet, so daß eine Verarbeitung nach dem Extrusionsblasen möglich ist.

Die Erfindung betrifft ein modifiziertes Polyethylenterephthalat enthaltend 85 bis 99, vorzugsweise 90 bis 99 Mol % Terephthalsäureeinheiten, 15 bis 1, vorzugsweise 10 bis 1 Mol % Isophthalsäureeinheiten und 0 bis 5 Mol % Einheiten, die von einer zusätzlichen aliphatischen oder aromatischen Dicarbonsäure abgeleitet sind, wobei die Prozentangaben auf die Gesamtmenge an Carbonsäureeinheiten im Polyester bezogen sind, und 95 bis 99,95 Mol % Ethylenglykoleinheiten, 0,05 bis 0,2 Mol % an Einheiten, die abgeleitet von einem tri − oder tetrafunktionellen Alkohol sind, und 0 bis 5 Mol % Einheiten abgeleitet von einem zusätzlichen zweiwertigen aliphatischen oder aromatischen Alkohol, wobei die Prozentangaben auf die Gesamtmenge an Alkoholeinheiten im Polyester bezogen sind, der praktisch keine durch Kettenabbrecher blockierte Endgruppen aufweist, eine Schmelzviskosität, gemessen bei 260°C und einer Scherrate von 1 sec$^{-1}$, zwischen 1000 und 10000 Pa*sec, einen Quotienten der Schmelzviskositäten, gemessen bei 260°C und einer Scherrate von 1 sec$^{-1}$ ($S_1$) sowie einer Scherrate von 100 sec$^{-1}$ ($S_{100}$), $S_1/S_{100}$ von 1,5 bis 5,0 und ein mittels Gel − Permeationschromatographie in einer Mischung von Hexafluorisopropanol und Chloroform als Lösungsmittel bestimmtes Verhältnis des Gewichts − und Zahlenmittels des Molekulargewichts von 2,3 bis 3,5 aufweist.

Der erfindungsgemäße Polyester besteht vorzugsweise aus Terephthalsäureeinheiten, Isophthalsäureeinheiten Ethylenglykoleinheiten und Einheiten, die abgeleitet von einem tri − oder tetrafunktionellen Alkohol, in den oben definierten Mengenanteilen.

Vorzugsweise enthält der erfindungsgemäße Polyester 90 bis 97 Mol % Terephthalsäureeinheiten und 3 bis 10 Mol % Isophthalsäureeinheiten.

Der Anteil der Einheiten, die abgeleitet von einem tri − oder tetrafunktionellen Alkohol beträgt vorzugsweise 0,075 bis 0,175 Mol %.

Bei den Einheiten, die von einer zusätzlichen aliphatischen oder aromatischen Dicarbonsäure abgeleitet sind, kann es sich ganz allgemein um Einheiten auf Basis einer beliebigen Dicarbonsäure handeln. Beispiele dafür sind aliphatische Dicarbonsäuren, wie Adipinsäure oder Sebacinsäure, cycloaliphatische Dicarbonsäuren, wie Cyclohexandicarbonsäure oder insbesondere aromatische Dicarbonsäuren, wie Dicarbonsäuren auf der Basis von zwei − oder mehrkernigen kondensierten oder nicht kondensierten carbocyclisch − aromatischen Systemen, wie 1,4 − Naphthalindicarbonsäure, 2,6 − Naphthalindicarbonsäure oder 1,4 − Biphenyldicarbonsäure.

Bei den Einheiten, die von einem zusätzlichen zweiwertigen aliphatischen oder aromatischen Alkohol abgeleitet sind, kann es sich ganz allgemein um Einheiten auf Basis eines beliebigen zweiwertigen Alkohols handeln. Beispiele dafür sind zweiwertige aliphatische Alkohole, wie 1,4 − Butandiol, 1,6 − Hexandiol, zweiwertige cycloaliphatische Alkohole, wie Cyclohexandiol oder Dimethylolcyclohexan, oder zweiwertige aromatische Alkohole, wie Resorcin oder Hydrochinon.

Bei den Einheiten, die von einem tri − oder tetrafunktionellen Alkohol abgeleitet sind, kann es sich um an sich bekannte Kettenverzweigungsmittel für Polyester handeln. Beispiele dafür sind drei − oder vierwertige aliphatische Alkohole, wie Trimethylolpropan, Glycerin oder insbesondere Pentaerithrit.

Die rheologischen Eigenschaften der erfindungsgemäßen modifizierten Polyethylenterephthalate werden nach an sich bekannten Verfahrensweise bestimmt.

So wird die Schmelzviskosität bei 260°C in Abhängigkeit der Scherrate bestimmt.

Der Quotient der Schmelzviskositäten $S_1/S_{100}$ (Thixotropiekoeffizient) wird jeweils bei 260°C und einer Scherrate von 1 sec − 1 ($S_1$) sowie einer Scherrate von 100 sec$^{-1}$ bestimmt.

Das Verhältnis des Gewichts − und Zahlenmittels des Molekulargewichts $M_w/M_n$ − (Uneinheitlichkeit) wird mittels Gel − Permeationschromatographie bestimmt. Dazu werden die Molekulargewichtsmittel des Polymeren mittels Gel − Permeationchromatographie in einem Gemisch von Chloroform und Hexafluorisopropanol (98 zu 2 Vol%) als Lösungsmittel bei 20°C über eine universelle Kalibrierung als Standard in an sich bekannter Weise bestimmt. Einzelheiten zur Bestimmungsmethode sind in J. Polymer Sei, Polymer Chem. Ed. 26, 1919 (1988) offenbart.

Die Herstellung des erfindungsgemäßen Polyesters erfolgt durch Polykondensation einer Mischung von 85 bis 99 Mol % Terephthalsäure oder deren polyesterbildenden Derivaten, 15 bis 1 Mol % Isophthalsäure oder deren polyesterbildenden Derivaten und 0 bis 5 Mol % Einheiten, die von einer zusätzlichen aliphatischen oder aromatischen Dicarbonsäure oder deren polyesterbildenden Derivaten abgeleitet sind, wobei die Prozentangaben auf die Gesamtmenge an Carbonsäureeinheiten im Polyester bezogen sind, und 95 bis 99,95 Mol % Ethylenglykoleinheiten, 0,05 bis 0,2 Mol % an Einheiten, die abgeleitet von einem tri − oder te − trafunktionellen Alkohol sind, und 0 bis 5 Mol % Einheiten abgeleitet von einem zusätzlichen zwei − wertigen aliphatischen oder aromatischen Alkohol, wobei die Prozentangaben auf die Gesamtmenge an Alkoholeinheiten im Polyester bezogen sind, in Abwesenheit eines monofunktionellen Kettenab − brechers, wobei eine anschließende Festphasen − kondensation ausgeschlossen ist.

Vorzugsweise wird die Polykondensation bis zu einer Grenzviskosität von bis zu 0,9 dl/g, insbe − sondere 0,5 bis 0,8 dl/g, gemessen in einem Ge − misch von Chloroform und Hexafluorisopropanol (97 zu 3 Vol%) als Lösungsmittel bei 20°C, durchgeführt.

Unter Grenzviskosität ist dabei der Ausdruck $\eta_{inh} = ln\eta_{rel}/c$ zu verstehen, wobei c die Konzentra − tion des Polymeren in g/dl bedeutet und $\eta_{rel}$ die relative Viskosität der Polymerlösung darstellt. Für die Zwecke der vorliegenden Erfindung wird die Grenzviskosität durch Extrapolation verschiedener Viskositäten für die Konzentration gegen Null be − stimmt.

Das Verfahren zur Herstellung des modifizier − ten Polyethylenterephthalats ist ebenfalls Gegen − stand der vorliegenden Erfindung.

Unter einem polyesterbildenden Derivat der einzusetzenden Dicarbonsäuren sind alle Derivate dieser Säuren zu verstehen, die in Kombination mit den Alkoholkomponenten zur Bildung der Polyester mit dem gewünschten Molekulargewicht fähig sind. Beispiele für solche Derivate sind die entspre − chenden Dicarbonsäuredichloride oder die ent − sprechenden Diester dieser Dicarbonsäuren, vor − zugsweise deren Dialkylester, insbesondere die Dimethylester.

Vorzugsweise führt man die Polykondensation in Abwesenheit von inerten Lösungsmitteln durch.

Die Polykondensation wird ohne Kettenabbre − cher durchgeführt; also ohne monofunktionelle Reaktionskomponenten, wie Monocarbonsäuren oder einwertige Alkohole. Die entstehenden End − produkte weisen also praktisch nur freie Carboxyl − oder Alkoholengruppen auf. In der Praxis bevorzugt man einen leichten Überschuß an Alkoholkompo − nenten.

Die Herstellung des Polyesters kann in Anwe − senheit von an sich bekannten Katalysatoren durchgeführt werden. Beispiele dafür sind Antimon −, Mangan −, Cobalt −, Titan − oder Germanium − Verbindungen. Katalysatoren werden üblicherweise in Mengen von 50 bis 1000 ppm, bezogen auf die Summe an Monomeren, zuge − setzt.

Die Polykondensation wird üblicherweise bei Temperaturen von 250 bis 300 °C durchgeführt und dauert in der Regel 2 bis 5 Stunden. Gegen − über der vorbekannten Variante, welche eine an − schließende Festphasenkondensation beinhaltet, läßt sich eine beträchtliche Zeitersparnis erhalten, was sich in einer erhöhten Produktivität des Ver − fahrens wiederspiegelt.

Das Molekulargewicht des gewünschten Pro − duktes kann in an sich bekannter Weise durch die Wahl der Reaktionsbedingungen, wie Reaktions − dauer und/oder Reaktionsdruck gesteuert werden. Die Auswahlkriterien sind dem Fachmann auf dem Gebiet der Polykondensation bekannt.

Vorzugsweise setzt man die Summe der Di − carbonsäurekomponenten in einem molaren Ver − hältnis zu der Summe der Alkoholkomponenten von 1 : 1,1 bis 1 : 2,5 ein.

Überraschenderweise lassen sich aus dem er − findungsgemäßen modifizierten Polyethylenter − ephthalat nach dem Extrusionsblasverfahren Be − hälter von bis zu etwa einem Liter Innenvolumen herstellen. Bei der Herstellung solcher Behälter kann von einer Zugabe von Kristallisationsförderern abgesehen werden.

Die Erfindung betrifft daher auch ein Verfahren zur Herstellung solcher Behälter.

Die Verfahrensprodukte zeichnen sich durch gute optische Eigenschaften, wie Glanz und Transparenz, und durch gute mechanische Fe − stigkeiten aus. Die Erfindung betrifft daher auch die Verfahrensprodukte als solche.

Die Verfahrensprodukte lassen sich auf allen Gebieten der Verpackungstechnik einsetzen, ins − besondere zur Verpackung von Kosmetika, Nahrungs − und Genußmitteln und Pharmazeutika.

Die nachfolgenden Beispiele verdeutlichen die Erfindung ohne sie zu begrenzen.

Beispiel 1:

30 kg Dimethylterephthalat, 30 g Pentaerithrit und 20 l Ethylenglykol werden in Gegenwart 330 ppm Manganacetat bei Temperaturen zwischen 150 °C und 230 °C umgeestert. Nach vollständi − ger Methanolabspaltung wird nach Temperaturer − höhung ein Teil des überschüssigen Ethylenglykols abdestilliert.

Nach der Umesterung wird der Umesterungs − katalysator (Manganacetat) durch Zusatz von phosphoriger Säure stabilisiert. Anschließend wer − den dem Ansatz 390 ppm Antimontrioxid und 2,25 kg Isophthalsäure zugegeben. Die Temperatur wird auf 280 °C erhöht und der Druck kontinuierlich auf 0,7 Torr erniedrigt. Der Ansatz wird anschließend bei den angegebenen Bedingungen auf die ge − wünschte intrinsische Viskosität (IV) kondensiert.

Der IV − Wert des Granulates beträgt 0,56 dl/g.

Beispiel 2:

Der nach Beispiel 1 modifizierte Polyester kann problemlos auf einer handelsüblichen PET – Extrusionsblasformanlage zu 250 ml und 500 ml Behältern verarbeitet werden.

Diese Anlage ist mit einem Glattrohrextruder (Durchmesser 60 mm, Länge 24 D) ausgerüstet. Die Verarbeitungstemperaturen liegen in einem Bereich zwischen 225 und 270 ˚C.

Die geblasenen Behälter zeichnen sich durch hohe Transparenz und guten Glanz sowie durch hohe Festigkeit und Dimensionsstabilität aus.

**Patentansprüche**

1. Modifiziertes Polyethylenterephthalat enthaltend 85 bis 99 Mol % Terephthalsäureeinheiten, 15 bis 1 Mol % Isophthalsäureeinheiten und 0 bis 5 Mol % Einheiten, die von einer zusätzlichen aliphatischen oder aromatischen Dicarbonsäure abgeleitet sind, wobei die Prozentangaben auf die Gesamtmenge an Carbonsäureeinheiten im Polyester bezogen sind, und 95 bis 99,95 Mol % Ethylenglykoleinheiten, 0,05 bis 0,2 Mol % an Einheiten, die abgeleitet von einem tri – oder tetrafunktionellen Alkohol sind, und 0 bis 5 Mol % Einheiten abgeleitet von einem zusätzlichen zweiwertigen aliphatischen oder aromatischen Alkohol, wobei die Prozentangaben auf die Gesamtmenge an Alkoholeinheiten im Polyester bezogen sind, der praktisch keine durch Kettenabbrecher blockierte Endgruppen aufweist, eine Schmelzviskosität, gemessen bei 260˚C und einer Scherrate von $1\ \text{sec}^{-1}$, zwischen 1000 und 10000 Pa*sec, einen Quotienten der Schmelzviskositäten, gemessen bei 260˚C und einer Scherrate von $1\ \text{sec}^{-1}$ ($S_1$) sowie einer Scherrate von 100 $\text{sec}^{-1}$ ($S_{100}$), $S_1/S_{100}$ von 1,5 bis 5,0 und ein mittels Gel – Permeationschromatographie in einer Mischung von Hexafluorisopropanol und Chloroform als Lösungsmittel bestimmtes Verhältnis des Gewichts – und Zahlenmittels des Molekulargewichts von 2,3 bis 3,5 aufweist.

2. Modifiziertes Polyethylenterephthalat nach Anspruch 1, dadurch gekennzeichnet, daß es sich bei dem tri – oder tetrafunktionellen Alkohol um Pentaerithrit handelt.

3. Modifiziertes Polyethylenterephthalat nach Anspruch 1, dadurch gekennzeichnet, daß der Anteil der Terephthalsäureeinheiten 90 bis 97 Mol % und der Anteil der Isophthalsäureeinheiten 3 bis 10 Mol % beträgt.

4. Modifiziertes Polyethylenterephthalat nach Anspruch 2 oder 3, dadurch gekennzeichnet, daß der Anteil der Pentaerithriteinheiten 0,075 bis 0,175 Mol % beträgt.

5. Verfahren zur Herstellung des modifizierten Polyethylenterephthalats nach Anspruch 1 durch Polykondensation einer Mischung von 85 bis 99 Mol % Terephthalsäure oder deren polyesterbildenden Derivaten, 15 bis 1 Mol % Isophthalsäure oder deren polyesterbildenden Derivaten und 0 bis 5 Mol % Einheiten, die von einer zusätzlichen aliphatischen oder aromatischen Dicarbonsäure oder deren polyesterbildenden Derivaten abgeleitet sind, wobei die Prozentangaben auf die Gesamtmenge an Carbonsäureeinheiten im Polyester bezogen sind, und 95 bis 99,95 Mol % Ethylenglykoleinheiten, 0,05 bis 0,2 Mol % an Einheiten, die abgeleitet von einem tri – oder tetrafunktionellen Alkohol sind, und 0 bis 5 Mol % Einheiten abgeleitet von einem zusätzlichen zweiwertigen aliphatischen oder aromatischen Alkohol, wobei die Prozentangaben auf die Gesamtmenge an Alkoholeinheiten im Polyester bezogen sind, in Abwesenheit eines monofunktionellen Kettenabbrechers, wobei eine anschließende Festphasenkondensation ausgeschlossen ist.

6. Verfahren nach Anspruch 5, dadurch gekennzeichnet, daß die Polykondensation bis zu einer Grenzviskosität von 0.9 dl/g, insbesondere 0,5 bis 0,8 dl/g, gemessen in einem Gemisch von Chloroform und Hexafluorisopropanol bei 20 ˚C, durchgeführt wird.

7. Verfahren zur Herstellung von Behältern mit bis zu etwa 1 Liter Innenvolumen durch Extrusionsblasverfahren, dadurch gekennzeichnet, daß zur Herstellung dieser Behälter ein Polyester nach Anspruch 1 eingesetzt wird.

8. Verfahren nach Anspruch 7, dadurch gekennzeichnet, daß die Herstellung ohne Zusatz eines Kristallisationsförderers erfolgt.

9. Verfahren nach Anspruch 7, dadurch gekennzeichnet, daß es sich bei dem tri – oder tetrafunktionellen Alkohol um Pentaerithrit handelt.

10. Verfahren nach Anspruch 7, dadurch gekennzeichnet, daß der Anteil der Terephthalsäureeinheiten 90 bis 97 Mol % und der Anteil der Isophthalsäureeinheiten 3 bis 10 Mol % beträgt.

**11.** Verfahren nach Anspruch 9 oder 10, dadurch gekennzeichnet, daß der Anteil der Pentaerithriteinheiten 0,075 bis 0,175 Mol % beträgt.

**12.** Extrusionsgeblasene Behälter mit einem Innenvolumen von weniger als etwa 1 Liter erhältlich aus einem Polyester nach Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DATABASE WPIL Week 8949, Derwent Publications Ltd., London, GB; AN 89-361082 & JP-A-1 271 217 (KANEBO KK) 30. Oktober 1989 * Zusammenfassung *  --- | 1-12 | C08G63/20 C08G63/181 B29C49/04 B65D65/38 |
| Y | GB-A-2 023 156 (THE GOODYEAR TIRE & RUBBER COMPANY) * Ansprüche 1-6; Beispiele 1-3 *  --- | 1-12 | |
| A | FR-A-2 102 127 (SANDOZ SA) * Seite 3, Zeile 3 - Seite 5, Zeile 23; Ansprüche 1-8 *  --- | 1-12 | |
| A | FR-A-2 372 854 (GENERAL ELECTRIC COMPANY)  ----- | | |

| | | | RECHERCHIERTE SACHGEBIETE (Int. Cl.5) |
|---|---|---|---|
| | | | C08G B29C B65D |

Der vorliegende Recherchenbericht wurde für alle Patentansprüche erstellt

| Recherchenort | Abschlußdatum der Recherche | Prüfer |
|---|---|---|
| DEN HAAG | 26 MAERZ 1993 | DECOCKER L. |